Europäisches Patentamt

European Patent Office

Office européen des brevets

(11) Publication number: 0 315 295
A1

# (12) EUROPEAN PATENT APPLICATION

(21) Application number: 88305707.7

(51) Int. Cl.4: **G11B 20/14**

(22) Date of filing: 22.06.88

(30) Priority: 05.11.87 US 116989

(43) Date of publication of application:
10.05.89 Bulletin 89/19

(84) Designated Contracting States:
DE FR GB

(71) Applicant: MAGNETIC PERIPHERALS INC.
8100-34th Avenue South
Minneapolis Minnesota 55440(US)

(72) Inventor: Minuhin, Vadim Boris
8709 Lakeview Circle
Bloomington Minnesota 55438(US)

(74) Representative: Caro, William Egerton et al
J. MILLER & CO. Lincoln House 296-302 High
Holborn
London WC1V 7JH(GB)

(54) **Apparatus for encoding and decoding data and a 3/2 frequency divider.**

(57) Apparatus for encoding or de-coding data in a 1,7,2,3 code with a data transfer rate of 1/T, where T is the time interval of a source data bit cell comprises a oscillator (18,40) responsive to the speed of a recording media on which encoded data is to be recorded to produce a media speed signal having a frequency f, or responsive to data to be de-coded recovered from a recording media to produce a read signal having a frequency f. A first divider (28) is responsive to the signal produced by the oscillator for producing a source data clock signal having a frequency equal to 2/3 f and a clock period equal to T. A second divider (54) is responsive to the signal produced by the oscillator for producing a data partition clock signal having a frequency equal to 1/3 f and a clock period equal to 2T. A converter (12,46) is responsive to a source data signal and to the media speed signal and to the data partition clock signal and to the source data clock signal to encode the source data in 1,7,2,3 code, or responsive to separated data recovered from the media and to the read signal and the data partition clock signal and to the source data clock signal to de-code the separate data from 1,7,2,3 code.

*Fig.-1*

## APPARATUS FOR ENCODING AND DE-CODING DATA AND A 3/2 FREQUENCY DIVIDER

This invention relates to apparatus for encoding and de-coding data and 3/2 frequency dividers.

Run length limited codes have gained significant recognition in magnetic data storage systems due to their ability to increase density of stored dated over other forms of code. One such code is the (1,7,2,3) code, which has a minimum of 1 encoded zero between successive encoded ones and a maximum of 7 encoded zeros between successive encoded ones, and it has a rate of 2/3, that is 2 source bits encoded into 3 codes bits. The advantages of (1,7,2,3) codes are described by T. Horiguchi and K. Morita, "An Optimization of Modulation Codes in Digital Recording", IEEE Transactions on Magnetics, Volume MAG-12, pages 740 -742, November 1976, By G. Jacoby and R. Kost, "Binary Two-Thirds Rate Code with Full Word Look-Ahead", IEEE Transactions on Magnetics, Volume MAG-20, pages 709 -714, September 1984; by P. H. Siegel, "Recording Codes for Digital Magnetic Storage", IEEE Transactions on Magnetics, Volume MAG-21, Pages 1344 - 1349, September 1985; and in US-A-4,337,458. One problem associated with the (1,7,2,3) code is that it requires a voltage controlled oscillator (VCO) operating at a frequency three times that of the data transfer rate. For data transfer rates of the order of 36 MHz, the VCO clock is required to operate at 108 MHz. Stability and reliable self-synchronisation of such codes operating at frequencies of the order of 108 MHz is difficult and costly. For example, US-A-4,337,458 requires clock signals at the VCO frequency, and at 1/2, 1/3 and 1/6 that frequency to operate the code converter. The data transfer rate, which is 1/3 of the VCO frequency in US-A-4,337,458, is limited by the frequency limitations of the voltage controlled oscillator.

In principle, LC clock generators can operate at frequencies in excess of 100 MHz. However, the values of the LC components would be so small as compared to the parasitic elements that each VCO would require individual tuning and its frequency would vary with small environmental changes. In addition, such VCOs would exhibit extra-ordinary problems due to radiation, electro-magnetic interference and screening requirements. Multi-vibrator-based VCOs, such as used in computer applications (such as US-A-4,337,458 and the present invention) are not susceptible to the problems of LC-based VCOs, but multi-vibrator-based VCOs are not capable of operating in excess of about 100 MHz using present technologies.

The present invention seeks to provide an encoding system for 1,7,2,3 codes wherein the VCO frequency is used directly as the encoded data clock frequency, to provide a system for derivation of the source data clock and data partition clock required for encoding and decoding 1,7,2,3 codes and, to provide a 3/2 frequency divider useful for encoding and de-coding 1,7,2,3, codes.

According to one aspect of the present invention, there is provided an apparatus for encoding or de-coding data in a 1,7,2,3 code with a data transfer rate of 1/T where T is the time interval of a source data bit cell, said apparatus characterised by comprising oscillating means responsive to the speed of a recording medium on which encoding data is to be recorded to produce a media speed signal having a frequency $f$ or responsive to data to be de-coded recovered from a recording media to produce a read signal having a frequency $f$; first divider means responsive to the signal produced by said oscillator means for producing a source data clock signal having a frequency equal to 2/3 $f$ and a clock period equal to T; second divider means responsive to the signal produced by said oscillator means for producing a data partition clock signal having a frequency equal to 1/3 $f$ and a clock period equal to 2T; and converter means responsive to a source data signal and to said media speed signal and to said data partition clock signal and to said source data clock signal to encode said source data in 1,7,2,3 code, or responsive to separated data recovered from said media and to said read signal and to said data partition clock signal and to said source data clock signal to de-code said separated data from 1,7,2,3, code.

The apparatus may include phase synchronisation means responsive to said data partition clock signal to synchronise operation by said first divider means.

In a preferred embodiment said first divider means comprises a first D-type flip-flop having D and clock inputs and Q and $\overline{Q}$ outputs, the second D-type flip-flop having D and clock inputs and Q and $\overline{Q}$ outputs, means responsive to the signal produced by said oscillator means for providing the signal from the oscillator means to the clock input of said first D-type flip-flop for providing the inverse of the signal from the oscillator means to the clock input of said second D-type flip-flop; first logic means responsive to the $\overline{Q}$ outputs of said first and second D-type flip-flops for providing a signal of a first state to the D inputs of said first and second D-type flip-flops when the $\overline{Q}$ output of either of said D-type flip-flops is in said first state, and for providing a signal of a second state to the D inputs of said first and second D-type flip-flops when the $\overline{Q}$ outputs of both said first and second D-type flip-flops are in said second state, said first state being opposite to said second state; and second logic means responsive to the Q outputs of said first and second D-type flip-flops to provide said source data clock signal.

Said first and second D-type flip-flops may each have a set input, said phase synchronising means, in operation, providing a synchronisation signal to the said set inputs.

Said first logic means may be an OR gate and said second logic means may be an AND gate.

According to another aspect of the present invention, there is provided a 3/2 divider circuit.

The invention is illustrated, merely by way of example, in the accompanying drawings, in which:-

Figure 1 is a block diagram of a data encoding/de-coding apparatus according to the present invention shown in a data encode or write mode;

Figure 2 is a block diagram of the apparatus of Figure 1 in a data de-code or read mode;

Figure 3 is a block diagram of a 3/2 frequency divider for use in the apparatus illustrated in Figures 1 and 2; and

Figure 4 is a set of waveforms illustrating operation of the 3/2 frequency divider illustrated in Figure 3.

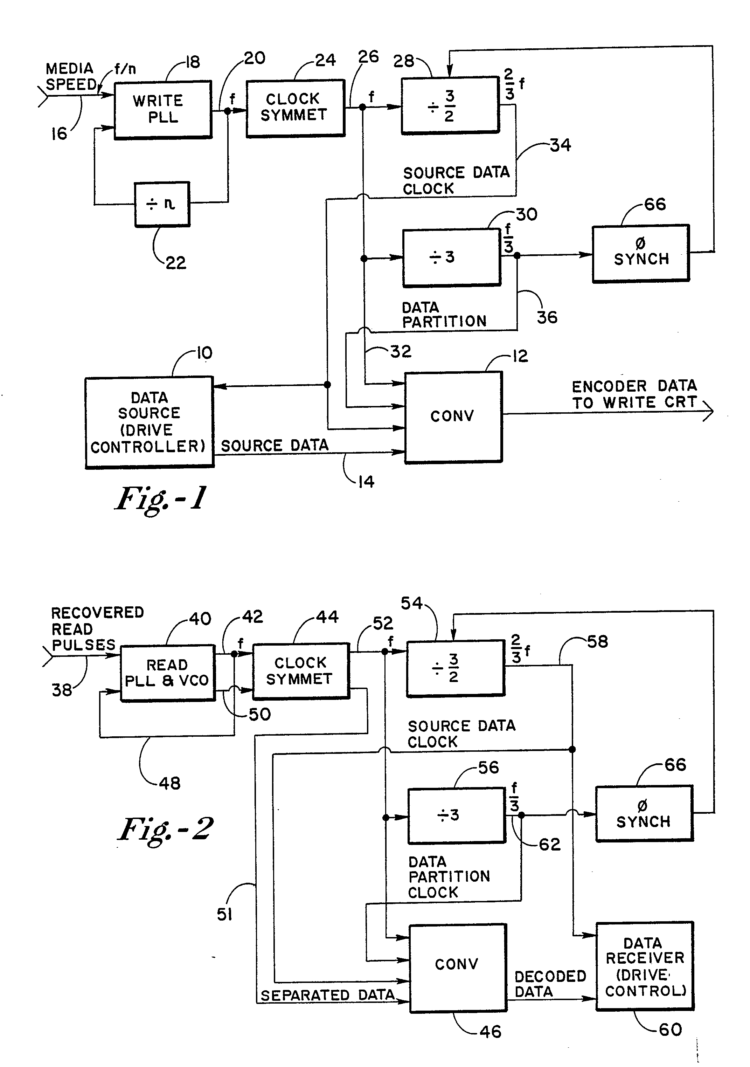

Referring to the drawings, and in particular to Figure 1, there is illustrated apparatus according to the present invention for encoding 1,7,2,3 code for write circuits to record onto a magnetic disk drive. A data source 10, which may conveniently be a disk drive controller, supplies source data to a code converter 12 via a channel 14. The source data has a transfer rate equal to 1/T, where T is the time interval of a source data bit cell. The converter 12 may be, for example, the encoding circuit illustrated in Figure 1 of the aforementioned US-A-4,337,458. The source data on the channel 14 is described as "data in" in US-A-4,337,458. A signal representative of media speed at a frequency of f/n is supplied via a channel 16 to a write phase lock loop 18 to provide an output on a channel 20 at a frequency f. The output of the channel 20 is provided through a divide-by-n circuit 22 the input of the phase lock loop 18 to lock in the frequency f/n of the signal on the channel 16. Optionally, a clock symmetricizer 24 is provided to give symmetry to an output signal on the channel 26. The signal on the channel 26 is at the desired VCO frequency f. This signal is provided as inputs to a 3/2 frequency divider 28, a divide-by-3 circuit 30, and via a channel 32 to the converter 12. The signal on the channel 32 is provided to an input 50 (Figure 2) of the converter.

The divider 28 provides a source data clock signal on a channel 34 at a frequency of 2/3 f. The source data clock period is equal to T. This signal is provided to the data source 10 and to the converter 12. The circuit 30 provides a data partition clock signal at a frequency of 1/3 f to the converter 12. The data partition clock signal has a period equal to 2T. Referring to Figure 1 of US-A-4,337,458, the signal on the channel 34 is provided to inputs 20,23 of US-A-4,337,458, and the signal on the channel 36 is provided to mode control inputs 22,48 of US-A-4,337,458.

The operation of the converter 12 is, essentially, as described in the aforementioned US-A-4,337,458, except that the input signals are at the VCO clock frequency f, and at 2/3 f and 1/3 f, from the divider 28 and circuit 30. In US-A-4,337,458 on the other hand, the clock signals are at 1/2, 1/3 and 1/6 the VCO clock frequency. Thus the apparatus of Figure 1 permits operation of the apparatus of US-A-4,337,458 at greater data transfer rates than heretofore achievable.

Figure 2 illustrates the apparatus in the read mode, wherein recovered read pulses on a channel 38 are applied to a read phase lock loop and a VCO 40, which provides a VCO signal on a channel 42 and the separated encoded data on the channel 50 to an optional clock symmetricizer 44. A feedback loop 48 from the channel 42 is provided for the phase lock loop and VCO 40. The clock symmetricizer 44 provides a signal of frequency f on a channel 52 to a 3/2 divider 54 (which may be identical to the divider 28 in Figure 1), to a divide-by-3 circuit 56 (which may be identical to the divide-by-3 circuit 30 in Figure 1) and as a clock input to a code converter 46. The coverter 46 is the de-coder illustrated in Figure 2 of the aforementioned US-A-4,337,458 with separate data on a channel 51 from the clock symmetricizer 44 being the "code in" signal provided to input 60 described in US-A-4,337,458. The output of the divider 54 is taken via channel 58 to the converter 46 and to a data receiver 60, which may conveniently be the disk drive controller. The channel 58 carries the source code clock signal at 2/3 the VCO frequency and at a time interval equal to T. The output of the circuit 56 is provided via a channel 62 to the converter 46. Referring to Figure 2 of US-A-4,337,458, the signal on the channel 52 is provided to inputs 64,78 described in US-A-4,337,458, the signal on the channel 58 being provided to input 88 of US-A-4,337,458, and a data partition clock signal on the channel 62 being provided to input mode control 72,76,86 of US-A-4,337,458.

The converter 46 operates in the manner as described in US-A-4,337,458, except that the input signals are operated at the VCO clock signal frequency, and at signal frequencies equal to 2/3 and 1/3 of the VCO clock signal frequency, rather than 1/2, 1/3 and 1/6 of the VCO frequency as described in US-A-4,337,458.

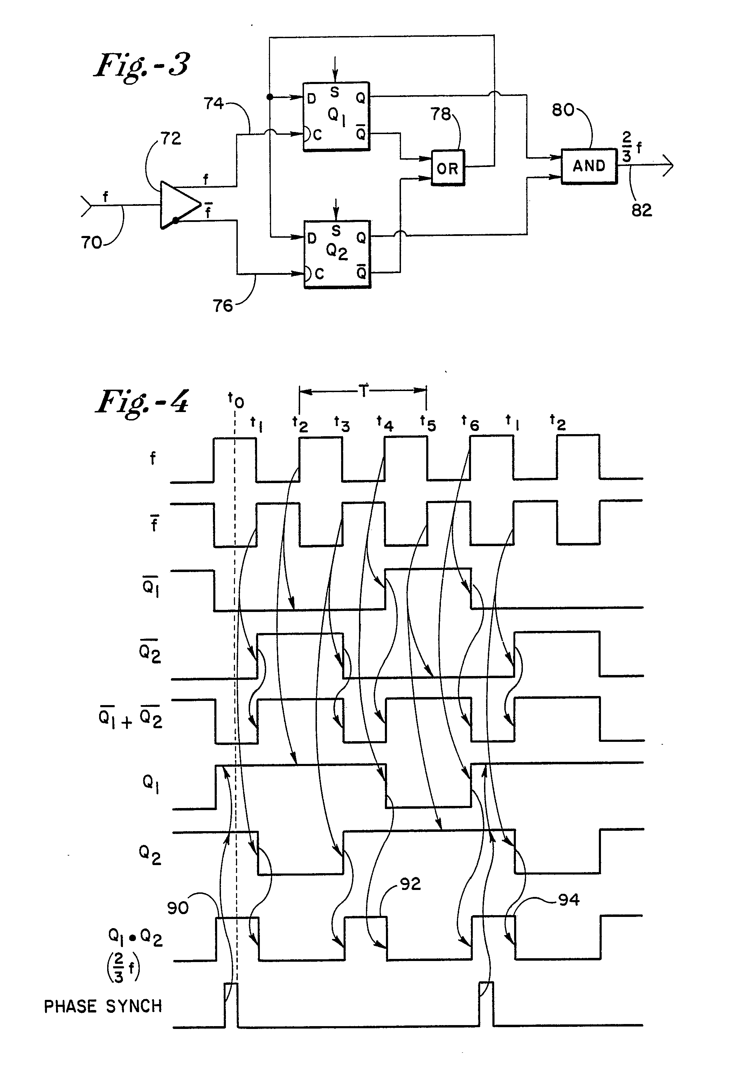

The circuits 30 (Figure 1) and 56 (Figure 2) may be simple count-to-three counters. The divider 28 (Figure 1) and the divider 54 (Figure 2) are shown in greater detail in Figure 3.

Referring to Figure 3, there is illustrated a block circuit diagram of a 3/2 frequency divider for use in the apparatus illustrated in Figures 1 and 2. The divider comprises an input channel 70 for receiving a signal frequency f. A unit 72 provides at separate outputs complementary signals f and $\bar{f}$ (f-not) on channels 74,76 respectively for input to clock inputs C of D-type flip-flops $Q_1,Q_2$. $\bar{Q}$ (Q-not) outputs of flip-flops $Q_1,Q_2$ are provided with a separate input to an OR gate 78 for input to D inputs of both the flip-flops $Q_1$, $Q_2$. The Q outputs of the flip-flops $Q_1,Q_2$ are provided as separate inputs to an AND gate 80, whose output on a channel 82 is the 2/3 f frequency signal for input to the converters 12,46, the data source 10 and the data receiver 60 in Figure 2.

Referring to Figure 4, the operation of the divider illustrated in Figure 3 will be explained. Starting at time $t_0$, the Q outputs of both the flip-flops $Q_1,Q_2$ are high and the $\bar{Q}$ outputs of both are low. In this condition, with both outputs Q high, an output pulse 90 from the AND gate 80 is provided on the channel 82 and the output of the OR gate 78 is low. At time $t_1$, the $\bar{f}$ to the clock input of the flip-flip $Q_2$ goes high, thereby re-setting the flip-flop $Q_2$ so that the $\bar{Q}$ output of the flip-flop $Q_2$ goes high, the Q output of the flip-flop $Q_2$ goes low, and the output of the OR gate 78 goes high. As a result, the signal on the channel 82 goes low. At time $t_2$, the leading edge of the pulse of the signal f is applied to the clock input of the flip-flop $Q_1$. However, since the high level from the OR gate 78 is applied to the D input of the flip-flop $Q_1$ and the flip-flop is already in a high state, there is no effect on the flip-flop $Q_1$. At time $t_3$, the leading edge of the signal is applied to the clock input of the flip-flop $Q_2$, thereby re-setting the flip-flop $Q_2$ (due to the previously high state of its D input), thereby setting the output Q of the flip-flop $Q_2$ high and the $\bar{Q}$ output of the flip-flop $Q_2$ low. With the $\bar{Q}$ output of the flip-flop $Q_2$ low, the output of the OR gate 78 goes low. With the Q output of the flip-flop $Q_2$ high, the leading edge of a pulse 92 is formed from the AND gate 80. At time $t_4$, the leading edge of a pulse of the signal f is applied to the clock input of the flip-flop $Q_1$. Due to the low state of the D input of the flip-flop $Q_1$, the flip-flop $Q_1$ is re-set low, thereby terminating the pulse 92. The $\bar{Q}$ output of the flip-flop $Q_1$ is set high, thereby setting the output of the OR gate 78 high to provide high D inputs to both the flip-flops. At time $t_5$, the leading edge of the $\bar{f}$ signal supplied to the clock input of the flip-flop $Q_2$ has no effect on the flip-flop $Q_2$ due

to the high D input of the flip-flop $Q_2$. As a result, the Q output of the flip-flop $Q_2$ remains high and the $\bar{Q}$ output of the flip-flop $Q_2$ remains low. At time $t_6$, the leading edge of a pulse of signal f operates to set the flip-flop $Q_1$ (due to the previously high state of the D input) thereby to establish the leading edge of a pulse 94. Also, the $\bar{Q}$ output of the flip-flop $Q_1$ is terminated, thereby terminating the output from the OR gate 78, thereby establishing the conditions at time $t_0$ illustrated in Figure 4.

Preferably, a phase synchroniser 66 (Figures 1 and 2) is provided at the outputs of the circuits 30 (Figure 1) and 56 (Figure 2) to provide short synchronising pulses (synch pulses, in Figure 4) to the over-riding set input S of the flip-flops $Q_1,Q_2$. As shown in Figure 4, the synchronising pulses normally occur (at a frequency of 1/2T or f/3) when both the flip-flops $Q_1,Q_2$ are already in their high states. Therefore, the synchronising pulses do not disturb the synchronous action of the 3/2 divider. The synchronising pulses serve to establish the initial phase relation of the source data clock signal (from the 3/2 divider) with the data partition clock signal from the divide-by-3 circuit. The synchronising pulses also serve to maintain the correct phase relation.

The present invention thus provides an effective recovery system for utilising 1,7,2,3 code, which does not require the high frequency VCO needed by previous systems. The result is that the apparatus is more effective in operation and makes greater use of the advantages of the code than previous systems.

One feature of the present invention resides in the fact that the data transfer rate is at the clock period T which is at a frequency of 2/3 f. For a data transfer frequency of 36 MHz, a VCO frequency of 54 MHz is required, rather than a 108 MHz required in US-A-4,337,458 for the same data transfer frequency. As a result, greater reliability and simplicity of design over US-A-4,337,458 is achieved.

**Claims**

1. Apparatus for encoding or de-coding data in a 1,7,2,3 code with a data transfer rate of 1/T where T is the time interval of a source data bit cell, said apparatus characterised by comprising oscillating means (18,40) responsive to the speed of a recording medium on which encoding data is to be recorded to produce a media speed signal having a frequency f or responsive to data to be de-coded recovered from a recording media to produce a read signal having a frequency f; first divider means (28) responsive to the signal produced by said oscillator means for producing a source data clock signal having a frequency equal to 2/3 f and a clock period equal to T; second divider means (54) responsive to the signal produced by said oscillator means for producing a data partition clock signal having a frequency equal to 1/3 f and a clock period equal to 2T; and converter means (12,46) responsive to a source data signal and to said media speed signal and to said data partition clock signal and to said source data clock signal to encode said source data in 1,7,2,3 code, or responsive to separated data recovered from said media and to said read signal and to said data partition clock signal and to said source data clock signal to de-code said separated data from 1,7,2,3, code.

2. Apparatus according to claim 1 characterised by including phase synchronisation means (66) responsive to said data partition clock signal to synchronise operation by said first divider means (28).

3. Apparatus as claimed in claim 1 or 2 characterised in that said first divider means (28) comprises a first D-type flip-flop ($Q_1$) having D and clock inputs and Q and $\overline{Q}$ outputs, the second D-type flip-flop ($Q_2$) having D and clock inputs and Q and $\overline{Q}$ outputs, means (72) responsive to the signal produced by said oscillator means for providing the signal from the oscillator means to the clock input of said first D-type flip-flop ($Q_1$) for providing the inverse of the signal from the oscillator means (18,40) to the clock input of said second D-type flip-flop; first logic means (78) responsive to the $\overline{Q}$ outputs of said first and second D-type flip-flops ($Q_1,Q_2$) for providing a signal of a first state to the D inputs of said first and second D-type flip-flops when the $\overline{Q}$ output of either of said D-type flip-flops is in said first state, and for providing a signal of a second state to the D inputs of said first and second D-type flip-flops when the $\overline{Q}$ outputs of both said first and second D-type flip-flops are in said second state, said first state being opposite to said second state; and second logic means (80) responsive to the Q outputs of said first and second D-type flip-flops to provide said source data clock signal.

4. Apparatus as claimed in claim 3 when dependent upon claim 2 characterised in that said first and second D-type flip-flops ($Q_1$, $Q_2$) each has a set input, said phase synchronising means (66), in operation, providing a synchronisation signal to the said set inputs.

5. Apparatus as claimed in claim 4 characterised in that said first logic means (78) is an OR gate and said second logic means (80) is an AND gate.

6. A 3/2 frequency divider responsive to an input signal having a frequency f to derive an output signal having a frequency 2/3 f, characterised by comprising: a first D-type flip-flop ($Q_1$) having a D input, a clock input, a Q output and a $\overline{Q}$ output; a second D-type flip-flop ($Q_2$) having a D input, a clock input, a Q output and a $\overline{Q}$ output; input means (72) for providing said input signal to the clock input of said first D-type flip-flop and providing an inverse of said input signal to the clock input of said second D-type flip-flop; first logic means (78) responsive to the $\overline{Q}$ outputs of said first and second D-type flip-flops for providing a signal of a first state to the D inputs of said first and second D-type flip-flops when the $\overline{Q}$ output of either of said D-type flip-flops is in said first state and for providing a signal of a second state to the D inputs of said first and second D-type flip-flops when the $\overline{Q}$ outputs of both of said first and second D-type flip-flops are in said second state, said first state being opposite said second state; and second logic means (80) responsive to the Q outputs of said first and second D-type flip-flops to provide said output signal.

7. Apparatus as claimed in claim 6 characterised in that said first logic means (78) is an OR gate and said second logic means (80) is an AND gate.

*Fig.-1*

*Fig.-2*

Fig.-3

Fig.-4

## DOCUMENTS CONSIDERED TO BE RELEVANT

EP 88305707.7

| Category | Citation of document with indication, where appropriate, of relevant passages | Relevant to claim | CLASSIFICATION OF THE APPLICATION (Int. Cl.4) |
|---|---|---|---|
| P,X | EP - A2 - 0 271 317 (FUJITSU)<br><br> * Abstract; fig. 1-3,9; page 3, lines 24-48; page 8, line 47 - page 9, line 30; claims 1-6; fig. 10,14 *<br><br>-- | 1,2-5 | G 11 B 20/14 |
| A | US - A - 4 684 921 (FOK)<br><br> * Fig. 2,3; column 3, line 40 - column 6, line 54 *<br><br>-- | 1 | |
| A | EP - A2 - 0 182 701 (DIGITAL EQUIPMENT)<br><br> * Abstract; fig. 3; page 1, line 6 - page 2, line 8; page 3, line 20 - page 7, line 6 *<br><br>-- | 1 | |
| A | EP - A1 - 0 200 370 (TOSHIBA)<br><br> * Abstract; fig. 3,4; page 5, line 5 - page 7, last line *<br><br>-- | 1 | **TECHNICAL FIELDS SEARCHED (Int. Cl.4)**<br><br>G 11 B 20/00<br>H 04 N 5/00<br>H 03 M 5/00-<br>13/00 |
| A | US - A - 4 413 251 (ADLER)<br><br> * Abstract; fig. 1,2 *<br><br>---- | 1 | |

The present search report has been drawn up for all claims

| Place of search | Date of completion of the search | Examiner |
|---|---|---|
| VIENNA | 16-01-1989 | DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82